# EUROPÄISCHE PATENTSCHRIFT

(11) **EP 0 815 382 B1**
(45) Veröffentlichungstag und Bekanntmachung des Hinweises auf die Patenterteilung: **28.07.1999**
(21) Anmeldenummer: 96905714.0
(22) Anmeldetag: 12.03.1996
(51) Int. Cl.: B41F 13/42, F16P 1/02, G10K 11/16, B30B 15/00, B41F 13/00

(54) **SCHALLSCHUTZ**
SOUNDPROOFING
INSONORISATION

(30) Priorität: 18.03.1995 DE 19509975; 03.05.1995 DE 19516178
(43) Veröffentlichungstag der Anmeldung: 07.01.1998
(73) Patentinhaber: Koenig & Bauer Aktiengesellschaft, 97080 Würzburg (DE)
(72) Erfinder: MICHALIK, Horst, Bernhard, D-97204 Höchberg (DE)
(86) Internationale Anmeldenummer: DE9600439
(87) Internationale Veröffentlichungsnummer: WO9629537

(56) Entgegenhaltungen:
- EP-A- 0 138 053
- EP-A- 0 321 632
- EP-A- 0 417 465
- FR-A- 2 359 271
- PATENT ABSTRACTS OF JAPAN vol. 18, no. 418 (M-1650), 5.August 1994 & JP,A,06 126351 (MURATA MACH LTD.), 10.Mai 1994,

## Beschreibung

Die Erfindung betrifft einen Schallschutz für eine Maschine gemäß dem Oberbegriff der Ansprüche 1 und 3.

Durch das DE-GM 90 07 329.0 ist es bekannt, schallabsorbierende Trennwände senkrecht zwischen zwei benachbarten Druckwerken oder zwischen einem Druckwerk und einem Falzapparat anzuordnen und mit ihren schallabsorbierenden Mitteln auf o. g. Schallemissionsquellen zu richten.

Nachteilig bei diesen Schutzeinrichtungen ist, daß zum Zwecke der Wartungs- und Einstellarbeiten die Schallschutzeinrichtung in umständlicher Art und Weise abgebaut werden muß.

Die FR-A-23 59 271 beschreibt Türen für einen Laderaum eines Sattelschlepperanhängers. Diese Türen sind wahlweise um eine rechte oder linke Schwenkachse schwenkbar.

Der Erfindung liegt die Aufgabe zugrunde, einen Schallschutz für eine Maschine oder von Teilen einer Maschine zu schaffen, welcher eine gute Zugänglichkeit ermöglicht.

Diese Aufgabe wird erfindungsgemäß durch die Merkmale des kennzeichnenden Teils der Ansprüche 1 und 3 gelöst.

Die mit der Erfindung erzielbaren Vorteile bestehen insbesondere darin, daß die Schutzeinrichtung für den Schall- und Berührungsschutz auf Grund ihrer Teilung durch eine Bedienperson ohne zusätzliche Hilfsmittel rasch entfernt werden kann zwecks Vornahme von Wartungs-, Einstell- oder Reparaturarbeiten. Dabei brauchen nur die entsprechenden Teile des Schallschutzes nach erforderlichem einsetzen oder entfernen von Scharnierbolzen noch um eine ihrer Längsseiten geschwenkt zu werden, um einen Teil der Berührungsschutzplatte zugängig zu machen und nachfolgend abzubauen, hinter welcher sich die entsprechenden Bauteile befinden. Eventuell muß nur der Deckel einer Kontrollöffnung abgenommen werden. Eine erforderliche Gangbreite ist infolge der Schwenkbarkeit der Türen gewährleistet.

Ein Ausführungsbeispiel der Erfindung ist in der Zeichnung dargestellt und wird im folgenden näher beschrieben.

Es zeigen
- Fig. 1: eine Vorderansicht einer erfindungsgemäßen Schutzeinrichtung mit teilweise geöffneten Teilen des Schallschutzes und mit Sicht auf hinter dem Schallschutz angeordnete Teile der Berührungsschutzplatte an z. B. eines Falzapparates einer Rollenrotationsdruckmaschine;
- Fig. 2: eine Darstellung analog Fig. 1, jedoch mit teilweise geöffneter Berührungsschutzplatte und mit Sicht auf Getriebeteile des Falzapparates;

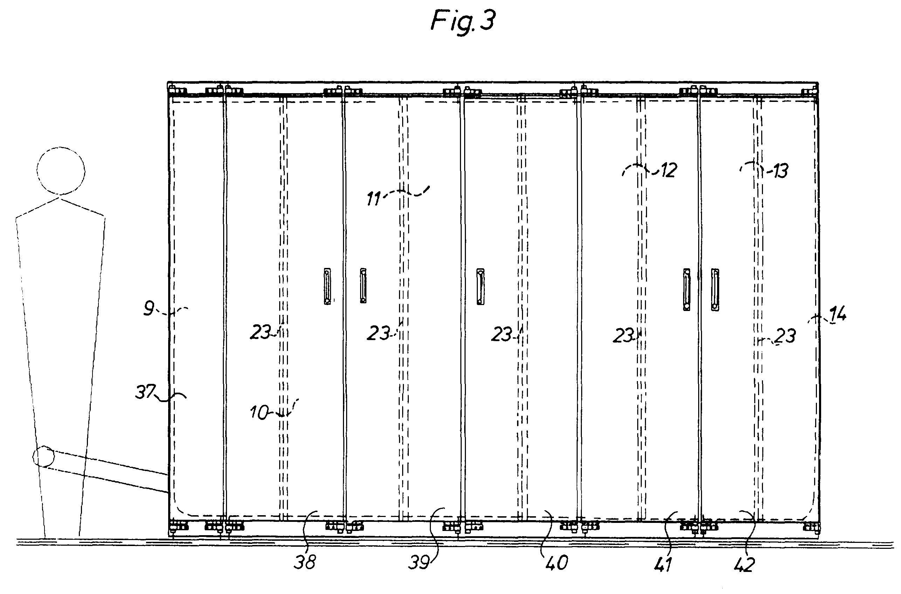

- Fig. 3: eine Vorderansicht der Schutzeinrichtung mit geschlossenem Schallschutz und einer gestrichelten Darstellung der hinter dem Schallschutz befindlichen Teilen der Berührungsschutzplatte mit gestrichelt dargestellten Befestigungsstegen sowie Borden des Seitengestells;
- Fig. 4: einen Schnitt IV - IV nach Fig. 1 mit einer vergrößerten Darstellung der Scharnieranordnung der Türen des Schallschutzes am Seitengestell;
- Fig. 5: einen Schnitt V - V nach Fig. 1 mit einer vergrößerten Darstellung eines Querschnittes der Schutzvorrichtung sowie des Seitengestells mit dem Getrieberaum.

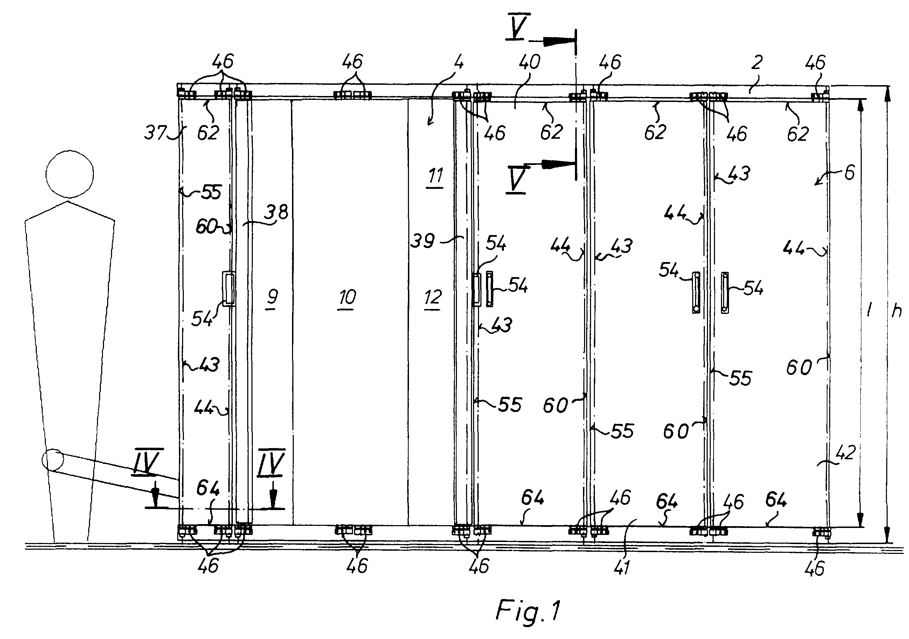

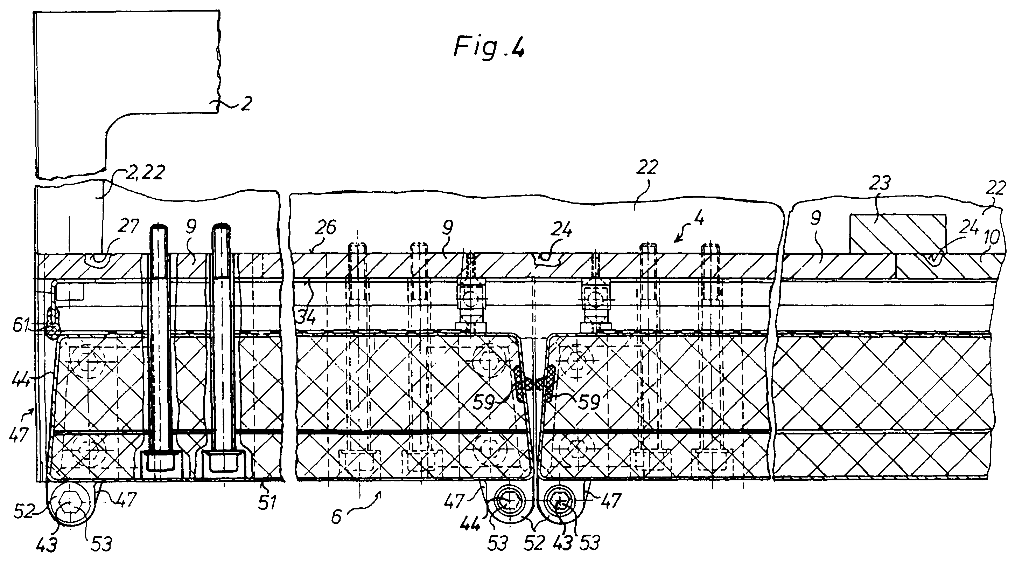

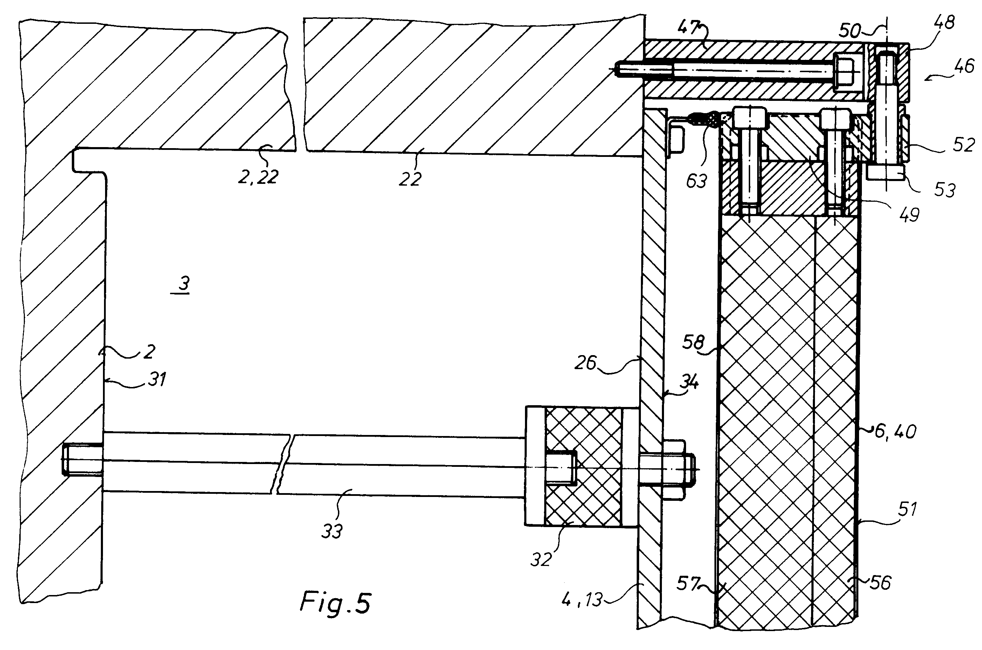

Eine Schutzeinrichtung 1 zum Abdecken z. B. eines im Seitengestell 2 eines Falzapparates einer Rotationsdruckmaschine befindlichen Getrieberaumes 3 besteht aus einer insgesamt mit 4 bezeichneten, mehrteiligen Berührungsschutzplatte und einer unabhängig von der Berührungsschutzplatte 4 handhabbaren mehrteiligen, insgesamt mit 6 bezeichneten Schallschutzeinrichtung. Die Bezugspfeile für die Platten 4; 6 weisen dabei jeweils nur auf einen Teil der Platte 4 bzw. der Türen 6 hin (Fig. 1). Die Berührungsschutzplatte (4) besteht aus mehreren, meist rechteckförmigen Teilen 9, 10, 11, 12, 13, gleicher Breite b und einem rechten Teil 14 mit halber Breite b, wobei die Teile 9 bis 14 eine unterschiedliche Länge aufweisen können. Die Länge der Teile 9 bis 14 ist abhängig von der Höhe bzw. dem Verlauf des Getrieberaumes 3 an der betreffenden Befestigungsstelle des Teiles 9 bis 14. Die Teile 9 bis 14 der Berührungsschutzplatte 4 sind an ihren senkrecht verlaufenden Längsseiten bzw. an ihren waagerecht verlaufenden Querseiten z. B. mittels nichtdargestellter Schrauben öldicht an sogenannten "Borden" 22 des Seitengestells 2 oder an senkrecht verlaufenden Halteleisten 23 befestigt (Fig. 4 und 5). Die Halteleisten 23 sind an ihren Enden formschlüssig mit den Borden 22 oder anderen Teilen des Seitengestells 2 verbunden. Eine Auflagefläche 24 der Halteleiste 23 für die getriebenahe Seite 26 der Teile 9 bis 14 der Berührungsschutzplatte 4 liegt in einer Ebene mit einer Auflagefläche 24 der Borde 22 des Seitengestells 2 (Fig. 4). Jedes Teil 9 bis 14 der Berührungsschutzplatte 4 kann eine oder mehrere öldicht verschließbare Kontrollöffnungen aufweisen. Zwischen einer Bodenfläche 31 des Getrieberaumes 3 und der getriebenahen Seite 26 der Teile 9 bis 14 der Berührungsschutzplatte 4 können mit den genannten Teilen 31, 4 formschlüssig verbundene, bekannte Schwingungs-Dämpfungselemente 32 angeordnet sein. Zweckmäßigerweise ist jedes Schwingungs-Dämpfungselement 32 auf seinen beiden Seiten mit einem Außen- bzw. Innengewinde versehen und jeweils auf einem Stehbolzen 33 angeordnet. Durch die Anordnung derartiger Schwingungs-Dämpfungselemente 32; 33 an mehreren Stellen des Getrieberaumes 3 sind die vorzugsweise aus Leichtmetall bestehenden Teile 9 bis 14 der Berührungsschutzplatte 4 vorgespannt, was der Verminderung einer Körper- sowie Luftschallausdehnung dient.

Auf der getrieberaumfernen Seite 34 der Teile 9 bis 14 der Berührungsschutzplatte 4 ist der mehrteilige Schallschutz 6 angeordnet. Der Schallschutz 6 besteht aus einer Mehrzahl eine gleiche Länge l aufweisenden, rechteckförmigen Türen 37, 38, 39, 40, 41, 42, welche am Seitengestell 2 nebeneinander angeordnet sind. Die Türen 37 bis 42 sind jeweils um ihre linke oder rechte vertikale Schwenkachse 43; 44 schwenkbar angeordnet, wobei die Schwenkachsen 43; 44 jeweils parallel zu einer linken und rechten Längsseite 55; 60 jeder Tür 37 bis 42 verlaufen. Somit sind die Türen 37 bis 42 wahlweise um eine ihrer jeweils senkrecht verlaufenden Längsseiten 44 jeweils mittels Scharnieren 46 schwenkbar am Seitengestell 2 angeordnet. Die Länge l der Türen 37 bis 42 des Schallschutzes 6 entspricht in etwa einer Bauhöhe h der Getrieberäume 3 des Falzapparates. Die Türen 38, 39, 40, 41, 42 des Schallschutzes 6 weisen eine etwa gleiche Breite b auf wie die Teile 10 bis 14 der Berührungsschutzplatte 4. Die linke Türe 37 des Schallschutzes 6 weist eine halbe Breite b auf, wodurch sich eine um eine halbe Breite b ergebende überdeckung zu den Teilen 9 bis 15 der dahinter angeordneten Berührungsschutzplatte 4 ergibt. Dies ist insofern von Vorteil, als daß z. B. beim Verschwenken der Türen 38, 39 des Schallschutzes 6 um ihre linke bzw. um ihre rechte Schwenkachse 43; 44 ein hinter dem Teil 10 der Berührungsplatte 4 liegendes Bauteil, z. B. ein Antrieb eines Falzklappenzyllnders nach dem Entfernen des Teiles 10 gut zugängig ist. Jeweils eine Breite b der Teile 9 bis 14 und Türen 38 bis 42 entspricht zumindest dem halben Durchmesser d des größten rotierenden Teiles des Falzapparates, z. B. einem Falzklappenzylinder oder einem Sammelzylinder, bzw. deren Antriebsrädern.

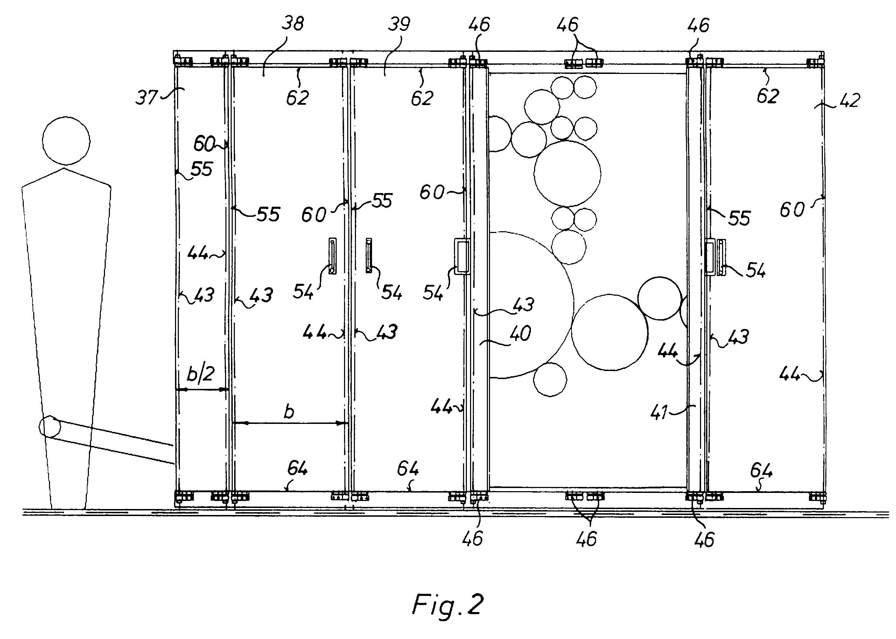

Die Scharniere 46 bestehen aus jeweils einem seitengestellfestem Scharnierteil 47, welches an seinem seitengestellfernen Ende eine Gewindebuchse 48 aufnimmt, deren Schwenkachse 44 vertikal verläuft. Ein zweites, jeweils an den Ecken jeder Tür 37 bis 42 des Schallschutzes 6 befestigtes Scharnierteil 49 weist an der getrieberaumfernen Außenseite 51 des Schallschutzes 6 eine Buchse 52 auf, deren Rotationsachse mit der Schwenkachse 44 der Gewindebuchse 48 fluchtet. Beide Buchsen 47; 52 sind zumindest im Ruhezustand der Türen 37 bis 42 des Schallschutzes 6 mit einem Gewindebolzen 53 verbunden. An jeder der Ruhezustand befindlichen Türen 37 bis 42 des Schallschutzes 6 ist an allen vier Ecken jeweils ein Gewindebolzen 53 eingebracht. Sollen nun, wie in Fig. 2 dargestellt, die Türen 38, 39 des Schallschutzes 6 geöffnet werden, so werden die Gewindebolzen 53 der unter- und oberhalb des Teiles 10 der Berührungsschutzplatte 4 angeordneten Scharniere 46 entfernt und die Türen 38, 39 des Schallschutzes 6 fungieren somit als links- bzw. rechtsangeschlagene Tür. Somit kann jede Tür 37 bis 42 um ihre linke oder rechte Schwenkachse 43; 44 freigebbar oder verriegelbar sein. Ebenso kann mit den Türen 40, 41 des Schallschutzes 6 verfahren werden (Fig. 2). Jede Tür 37 bis 42 des Schallschutzes 6 kann für den Bedienfall mit einem Bediengriff 54 ausgestattet werden, welcher alt der jeweiligen Tür 37 bis 42 formschlüssig verbindbar ist. Jeweils hinter den Bediengriffen 54, als auf der getrieberaumnahen Seite der Türen 37 bis 42 des Schallschutzes 6 kann jeweils eine nichtgezeigte Zuhalteeinrichtung vorgesehen sein, die z. B. magnetisch betätigbar ist und die mit den Teilen 9 bis 14 der Berührungsschutzplatte 4 zusammenwirkt. Es ist auch möglich, jede Tür 37 bis 42 durch Lösen der jeweils vier Gewindebolzen 53 aus den Scharnieren 46 aus dem Schallschutz 6 zu entfernen.

Die linke und rechte vertikale Schwenkachse 43; 44 kann in der Nähe der linken und rechten Längsseite 55; 60 jeder Tür 37 bis 42 verlaufen (Fig. 2). Es ist auch möglich, daß die linke und rechte vertikale Schwenkachse 43; 44 in übereinstimmung befindlich ist mit der linken und rechten Längsseite 55; 60 jeder Tür 37 bis 42.

Jede Tür 37 bis 42 des Schallschutzes 6 besteht aus einem abgekantetem Blechteil, welches eine mehrlagige Schalldämmauskleidung 56; 57 aufnimmt, welche auf der getrieberaumnahen Seite des Schallschutzes 6 jeweils mit einem Lochblech 58 gehalten und geschützt ist.

An den Längsseiten 55; 60 der Türen 37 bis 42 des Schallschutzes 6 sind jeweils gegeneinander wirkende Gummidichtstreifen 59 angeordnet. Auf die äußeren, den Schallschutz 6 begrenzenden Längsseiten 55; 60 der Türen 37, 42 können auch seitengestellfest bzw. berührungsschutzplattenfest angeordnete Gummidichtstreifen 61 wirken (Fig. 4). Ebenso können auf die oberen und unteren Seiten 62; 64 der Türen 37 bis 42 des Schallschutzes 6 seitengestellfest bzw. berührungsschutzplattenfest angeordnete Gummidichtstreifen 63 wirken (Fig. 5).

### Teileliste

- 1: Schutzeinrichtung
- 2: Seitengestell
- 3: Getrieberaum (2)
- 4: Berührungsschutzplatte (1)
- 5: -
- 6: Schallschutz (1)
- 7: -
- 8: -
- 9 bis 14: Teil (4)
- 15: -
- 16: -
- 17 bis 20: Sichtöffnung (2)
- 21: -
- 22: Borde (2)
- 23: Halteleiste (2)
- 24: Auflagefläche (23)
- 25: -
- 26: Seite, getriebenah (9 bis 15)
- 27 bis 30: -
- 31: Bodenfläche (3)
- 32: Schwingungs-Dämpfungselement
- 33: Stehbolzen (32)
- 34: Seite, getrieberaumfern (9 bis 15)
- 35: -
- 36: -
- 37 bis 42: Türen (6)
- 43: Schwenkachse, links (37 bis 42)
- 44: Schwenkachse, rechts (37 bis 42)
- 45: -
- 46: Scharnier (37 bis 42)
- 47: Scharnierteil, seitengestellfest
- 48: Gewindebuchse (47)
- 49: Scharnierteil, türteilfest (37 bis 42)
- 50: Rotationsachse (48; 52)
- 51: Außenseite, getrieberaumfern (6)
- 52: Buchse (49)
- 53: Gewindebolzen (46)
- 54: Bediengriff (37 bis 42)
- 55: Längsseite, links (37 bis 42)
- 56: Schalldämmauskleidung (6)
- 57: Schalldämmauskleidung (6)
- 58: Lochblech (37 bis 42)
- 59: Gummidichtstreifen, teilefest (44)
- 60: Längsseite, rechts (37 bis 42)
- 61: Gummidichtstreifen, seitengestellfest (44)
- 62: Seite, obere (37 bis 42)
- 63: Gummidichtstreifen, seitengestellfest (62)
- 64: Seite, untere (37 bis 42)
- b: Breite (9 bis 14)
- d: Durchmesser, Zylinder
- h: Bauhöhe (3)
- l: Länge (37 bis 42)

## Patentansprüche

1. Schallschutz für eine Rotationsdruckmaschine, wobei der Schallschutz (6) mindestens eine Tür (37 bis 42) aufweist, die mit einer Schalldämmauskleidung (56, 57) versehen ist, dadurch gekennzeichnet, daß die Tür (37 bis 42) eine linke (43) und eine rechte vertikale Schwenkachse (44) aufweist, daß die Schwenkachsenfunktion der linken (43) und rechten Schwenkachse (44) wahlweise aufhebbar ist.

2. Schallschutz nach Anspruch 1, dadurch gekennzeichnet, daß die Rotationsdruckmaschine mindestens ein mit einem Schallschutz (6) versehenes Seitengestell (2) aufweist und daß in oder an Seitengestellen (2) der Rotationsdruckmaschine Getrieberäume (3) vorgesehen sind, daß zwischen den Getrieberäumen (3) und der Tür (37 bis 42) eine mehrteilige Berührungsschutzplatte (4) angeordnet ist.

3. Schallschutz nach Anspruch 1, dadurch gekennzeichnet, daß die linke und rechte vertikale Schwenkachse (43; 44) parallel zu einer linken und rechten Längsseite (55; 60) jeder Tür (37 bis 42) verläuft.

4. Schallschutz nach Anspruch 1, dadurch gekennzeichnet, daß die linken und rechten Schwenkachsen (43; 44) in Übereinstimmung befindlich sind mit den linken und rechten Längsseiten (55; 60) jeder Tür (37 bis 42).

5. Schallschutz nach Anspruch 1, dadurch gekennzeichnet, daß die linke und rechte Schwenkachse (43; 44) in der Nähe der linken und rechten Längsseite (55; 60) jeder Tür (37 bis 42) befindlich ist.

6. Schallschutz nach Anspruch 2, dadurch gekennzeichnet, daß die Türen (37 bis 42) des Schallschutzes (6) jeweils eine Länge (l) aufweisen, daß die Länge (l) ungefähr einer Bauhöhe (h) der Getrieberäume (3) entspricht.

7. Schallschutz nach Anspruch 1, dadurch gekennzeichnet, daß die Türen (37 bis 42) des Schallschutzes (6) zu den Teilen (9 bis 14) des Berührungsschutzes (4) um jeweils etwa eine halbe Teilebreite (b) zueinander versetzt am Seitengestell (2) angeordnet sind.

8. Schallschutz nach Anspruch 1, dadurch gekennzeichnet, daß die Türen (37 bis 42) des Schallschutzes (6) jeweils mit einem Bediengriff (54) versehbar sind.

9. Schallschutz nach Anspruch 1, dadurch gekennzeichnet, daß die Türen (37 bis 42) des Schallschutzes (6) an ihren Ecken jeweils mittels Scharnieren (46) am Seitengestell (2) befestigbar sind.

10. Schallschutz nach Anspruch 1, dadurch gekennzeichnet, daß an den Längsseiten (55; 60) der Türen (37 bis 42) des Schallschutzes (6) jeweils gegeneinander wirkende Gummidichtstreifen (59) angeordnet sind.

11. Schallschutz nach Anspruch 1, dadurch gekennzeichnet, daß die oberen und unteren Seiten (62;64) der Türen (37 bis 42) des Schallschutzes (6) gegen seitengestellfeste Gummidichtstreifen (63) festlegbar angeordnet sind.

12. Schallschutz nach Anspruch 1, dadurch gekennzeichnet, daß zum Verschwenken der Türe (37 bis 42) linke und rechte Scharniere (46) vorgesehen sind, deren Scharnierwirkung wahlweise aufhebbar ist.

## Claims

1. Soundproofing for a rotary press, the soundproofing (6) having at least one door (37 to 42) which is provided with a sound absorbing lining (56, 57), characterized in that the door (37 to 42) has a left-hand vertical pivoting axis (43) and a right-hand vertical pivoting axis (44), and in that the pivoting axis function of the left-hand pivoting axis (43) and of the right-hand pivoting axis (44) can be optionally cancelled.

2. Soundproofing according to Claim 1, characterized in that the rotary press has at least one side frame (2) provided with soundproofing (6), in that gear compartments (3) are provided in or on side frames (2) of the rotary press, and in that a multipartite touch guard plate (4) is arranged between the gear compartments (3) and the door (37 to 42).

3. Soundproofing according to Claim 1, characterized in that the left-hand and right-hand vertical pivoting axes (43; 44) run parallel to a left-hand and right-hand long side (55; 60) of each door (37 to 42).

4. Soundproofing according to Claim 1, characterized in that the left-hand and right-hand pivoting axes (43; 44) correspond to the left-hand and right-hand long sides (55; 60) of each door (37 to 42).

5. Soundproofing according to Claim 1, characterized in that the left-hand and right-hand pivoting axes (43; 44) are located in the vicinity of the left-hand and right-hand long sides (55; 60) of each door (37 to 42).

6. Soundproofing according to Claim 2, characterized in that the doors (37 to 42) of the soundproofing (6) are of a length (l) in each case, and in that the length (l) corresponds approximately to an overall height (h) of the gear compartments (3).

7. Soundproofing according to Claim 1, characterized in that the doors (37 to 42) of the soundproofing (6) to the parts (9 to 14) of the touch guard (4) are arranged on the side frame (2) offset relative to one another in each case by approximately half a part width (b).

8. Soundproofing according to Claim 1, characterized in that the doors (37 to 42) of the soundproofing (6) can be provided in each case with an operating handle (54).

9. Soundproofing according to Claim 1, characterized in that the doors (37 to 42) of the soundproofing (6) can be fastened on the side frame (2) at their corners by means of hinges (46) in each case.

10. Soundproofing according to Claim 1, characterized in that rubber sealing strips (59) respectively acting against one another are arranged on the long sides (55; 60) of the doors (37 to 42) of the soundproofing (6).

11. Soundproofing according to Claim 1, characterized in that the upper and lower sides (62; 64) of the doors (37 to 42) of the soundproofing (6) are arranged such that they can be located against rubber sealing strips (63) fixed on the side frames.

12. Soundproofing according to Claim 1, characterized in that left-hand and right-hand hinges (46) whose hinging action can be optionally cancelled are provided for swivelling the doors (37 to 42).

## Revendications

1. Insonorisation d'une presse rotative. Insonorisation (6) présentant au moins une porte (37 à 42) dotée d'un revêtement pour isolation acoustique (56, 57). Les portes (37 à 42) sont équipées d'un axe de pivotement (44) gauche (43) et droit. La fonction d'axe de pivotement de cet axe (44) gauche (43) et droit peut être neutralisée.

2. Insonorisation conforme à la revendication 1, caractérisée par le fait que la presse rotative est dotée d'au moins un support latéral (2) pour l'insonorisation (6) et que des compartiments d'engrenages (3) sont prévus au niveau du support latéral (2) de la presse rotative, et enfin qu'une plaque de protection contre les contacts accidentels (4) composée de plusieurs pièces est disposée entre les compartiments d'engrenages (3) et les portes (37 à 42).

3. Insonorisation conforme à la revendication 1, caractérisée par le fait que les axes de pivotement verticaux gauches et droits (43 ; 44) sont parallèles aux grands côtés gauches et droits (55 ; 60) de chacune des portes (37 à 42).

4. Insonorisation conforme à la revendication 1, caractérisée par le fait que les axes de pivotement gauches et droits (43 ; 44) sont disposés conformément aux grands côtés gauches et droits (55 ; 60) de chacune des portes (37 à 42).

5. Insonorisation conforme à la revendication 1, caractérisée par le fait que les axes de pivotement gauches et droits (43 ; 44) sont situés à proximité des grands côtés gauches et droits (55 ; 60) de chacune des portes (37 à 42).

6. Insonorisation conforme à la revendication 1, caractérisée par le fait que les portes (37 à 42) de l'installation d'insonorisation (6) ont chacune une longueur (L) environ égale à la hauteur (h) des compartiments d'engrenages (3).

7. Insonorisation conforme à la revendication 1, caractérisée par le fait que les portes (37 à 42) de l'installation d'insonorisation (6) disposées au niveau du support latéral (2) sont chacune décalées les unes des autres d'environ une demi-largeur de pièce au niveau des pièces (9 à 14) de la plaque de protection contre les contacts accidentels (4).

8. Insonorisation conforme à la revendication 1, caractérisée par le fait que les portes (37 à 42) de l'installation d'insonorisation (6) sont toutes dotées d'une poignée de commande (54).

9. Insonorisation conforme à la revendication 1, caractérisée par le fait que les portes (37 à 42) de l'installation d'insonorisation (6) peuvent être fixées sur le support latéral (2) au niveau de leurs coins à l'aide de charnières (46).

10. Insonorisation conforme à la revendication 1, caractérisée par le fait que les grands côtés (55 : 60) des portes (37 à 42) de l'installation d'insonorisation (6) sont tous dotés de joints en caoutchouc (59) antagonistes.

11. Insonorisation conforme à la revendication 1, caractérisée par le fait que les faces supérieures et inférieures (62 ; 64) des portes (37 à 42) de l'installation d'insonorisation (6) sont disposées fixement contre les joints en caoutchouc (63) du support latéral.

12. Insonorisation conforme à la revendication 1, caractérisée par le fait que des charnières gauches et droites (46), pouvant être neutralisées au choix, sont prévues pour la rotation des portes (37 à 42).
